# EUROPEAN PATENT SPECIFICATION

(11) **EP 2 927 551 B1**
(45) Date of publication and mention of the grant of the patent: **02.03.2022**
(21) Application number: 14162576.4
(22) Date of filing: 31.03.2014
(51) Int. Cl.: F16L 5/02, F16L 25/00, H02G 3/06

(54) **Connection sleeve and manifold cabinet**
Verbindungsmuffe und Verteilergehäuse
Manchon de raccordement et boîtier de collecteur

(43) Date of publication of application: 07.10.2015
(73) Proprietor: Uponor Innovation AB, 73061 Virsbo (SE)
(72) Inventor: Persson, Hakan, SE-73061 Virsbo (SE); Valola, Jonne, 15521 Nastola (FI); Prem, Klaus, SE-73061 Virsbo (SE); Hallen, Mats, SE-73061 Virsbo (SE); Ottoson, Ake, SE-73061 Virsbo (SE)
(74) Representative: Papula Oy

(56) References cited:
- EP-A1- 2 175 183
- WO-A1-89/09900
- DE-A1- 4 325 420
- DE-C1- 10 032 010
- DE-C1- 19 804 719
- DE-U1- 8 624 802
- FR-A1- 2 809 877
- JP-A- 2003 032 855
- US-A- 2 311 427
- US-A- 3 101 205
- US-A- 3 139 768
- US-A- 3 584 888
- US-A- 4 640 479

## Description

### FIELD OF THE INVENTION

The present invention relates generally to plumbing arrangements for water and heat supply in buildings. In particular, the present invention relates to lead-through arrangements for waterproof connections of water pipes to manifold cabinets.

### BACKGROUND OF THE INVENTION

Flexible plastic water pipes made of e.g. cross-linked polyethylene PEX are commonly used to form the tap water networks as well as heating water networks or, more generally, heating medium networks in various buildings. To protect the actual water pipe (or, more generally, a "medium pipe" for any fluid to be led in the pipe) and, on the other hand, to collect the possible leak water from damaged water pipes or leaking connections, the water pipe is often covered by a protective tube. This is the case especially in tap water systems, but protective pipes are used in heating systems as well.

To enable the required connections between the water main and the various taps of a building, or between the heating water supply and the various heating loops, the water pipes are typically connected to manifolds with several inlet and outlet connections. The manifolds are often located within specific manifold cabinets protecting the manifolds and the pipes, and hiding them behind a clean casing.

The manifold cabinets should be made waterproof to enable leading of leak water out of the cabinet in a controlled way to ensure early detection of the leak and to avoid damages. Waterproofness necessitates, naturally, that the passing of the pipes through holes in the cabinet walls shall be made in a water-tight manner.

Various pipe through-fittings are known for watertightly leading pipes through a manifold cabinet casing. In one approach, the through-fitting is formed by means of a two-part connection element, the first part of which comprises a collar portion with a thread and a radial flange. The collar portion is located through a hole in the cabinet wall from a first side of the wall, after which the second part of the connection element, in the form of a threaded sleeve, is screwed on the threaded collar portion from the other side of the wall. Thereby, the cabinet wall is pressed between the threaded sleeve and the flanges. One or more sealing rings made of rubber or some other suitable elastic material are arranged on at least one of the two parts to seal the gap between the connector and the cabinet wall. The medium pipe together with the protective tube is put through the connector, after which the protective tube is locked to the connector by means of a clamp mounted on the connector.

To facilitate the installation work and reduce the components of the through-fitting assembly, also plug-in type connection elements formed of a resilient material, e.g. rubber, have been developed. Such plug-in type connection elements comprise a single body with a collar portion to be extended through a hole in the cabinet wall, and a jointing means for jointing the connection sleeve to the cabinet wall edge surrounding the hole therein. A plug-in type connection element is simply pushed through the hole in the cabinet wall until the cabinet wall is jointed to the cabinet wall by means of the jointing means. D1: DE 100 32 010 C1 discloses a connection fitting, to mount a longitudinal pipe etc. at a passage opening through a housing wall.

D2: DE 4325420 A1 discloses a cable bushing device for passing a sheathed cable.

D3: DE 19804719 C1 discloses a connection fitting for fixing elongated bodies e.g. pipes or cables at an opening, especially in a wall of a housing.

D4: FR 2809877 A1 discloses a sealed grommet having an olive molded onto the outside of the cable sleeve and an annular liner that is fitted into the hole in the bulkhead.

### PURPOSE OF THE INVENTION

It is a purpose of the present invention to provide an improved tubular plug-in type connection sleeve for forming a lead-through of a water pipe with a protective tube thereon through a manifold cabinet wall, the improved connection sleeve enabling fast and simple installation and reliable, water-tight joints between the cabinet wall and the connection sleeve as well as between the connection sleeve and the protective tube pushed into it.

### SUMMARY OF THE INVENTION

The connection sleeve of the present invention is characterized by what is specified in claim 1.

The tubular plug-in type connection sleeve of the present invention is designed for forming a lead-through of a water pipe with a protective tube thereon through a hole in a wall of a manifold cabinet. By water pipe is meant here a pipe capable of leading any flowable medium, i.e. any fluid in it. So, the water pipe could also be called a medium pipe.

By lead-through is meant here generally the connection or joint between a water pipe within a protective tube and a wall of the manifold cabinet, the pipe being led through a hole in such wall.

"Tubular" refers to a generally tube-formed geometry of the connection sleeve. A tubular geometry naturally means that the connection sleeve has a longitudinal axis, around which a generally cylindrical tube wall, forming the actual body of the connection sleeve, lies. "Axial" refers in this document generally to the direction of such longitudinal axis of the tubular connection sleeve. Respectively, "radial" refers to a direction substantially perpendicular to that longitudinal axis direction.

A tubular body of the connection sleeve also naturally has an inner and an outer surface. The tubular nature of the connection sleeve allows the water pipe to be led into and through it. In some embodiments, only the actual medium pipe is led entirely through the connection sleeve, whereas the protective pipe end is to be located within it.

The plug-in type nature of the connection sleeve means that the connection sleeve can be jointed to the wall of the manifold cabinet simply by pushing it through the hole in the cabinet wall until the cabinet wall is jointed to the cabinet wall by means of jointing means, which are discussed below, arranged in the connection sleeve.

According to the present invention, the connection sleeve comprises a flange portion made of an elastomer, the flange portion defining, on the outer surface of the connection sleeve, an annular sealing surface. Elastomers are, as known, resilient, i.e. elastic, stretchable, and generally rather soft materials. A common example is rubber. Another suitable example to be used in the connection sleeve of the present invention is thermoplastic elastomer (TPE). Due do their softness and deformability, elastomers are a good choice for forming water-tight sealings. The sealing surface defined by the flange portion allows a waterproof contact between the outer surface of the connection sleeve and the cabinet wall having a hole through which the connection sleeve is placed to extend.

The connection sleeve further comprises a radially outwards extending snapping protrusion on the outer surface of the connection sleeve defining, together with the annular sealing surface, a snapping gap for receiving, when in use, a cabinet wall edge surrounding the hole in the cabinet wall, whereby the annular sealing surface is pressed against the cabinet wall. The snapping protrusion thus forms a deflectable protrusion allowing sliding of the tubular connection sleeve body, from one side of the cabinet wall, through a hole in the cabinet wall, until the snapping protrusion catches the undercut formed by the cabinet wall edge, i.e. is snapped behind the cabinet wall edge.

The connection sleeve of the present invention thus is a snap-fit jointable connection sleeve. The snap-fit jointable nature of the connection sleeve means, selfevidently, that the connection sleeve can be jointed to the cabinet wall by means of a snap-fit joint. As is clear for a skilled person, a snap-fit joint is a general term for jointing two components together by means of a protruding element of one component being reversibly deflected and thereby allowing a sliding movement of the two parts with respect to each other until the deflected protrusion is caught in a depression or undercut in the mating component.

The snapping protrusion can be shaped and dimensioned according to the principles known in the field of snap-fit joints. The snapping gap width in the longitudinal direction of the connection sleeve is dimensioned so that the annular sealing surface is pressed against the cabinet wall edge sufficiently tightly to provide a waterproof contact between the connection sleeve and the cabinet wall.

The connection sleeve further comprises a tube section made of an elastomer for receiving the protective tube, the tube section inner surface being shaped and dimensioned so as to be set, when in use, against the protective tube received in the tube section. The tube section made of an elastomer thus serves for forming a waterproof contact between the protective tube and the connection sleeve. Together with a waterproof contact between the connection sleeve and the cabinet wall, this allows a waterproof lead-through of a water pipe protected by a protective tube thereon.

Further, the connection sleeve according to the present invention comprises a gripping protrusion extending radially inwards from the inner surface of the connection sleeve for gripping the protective tube received, when in use, in the connection sleeve; and a stiffening member made of a plastic material, comprising a closed ring portion extending around the circumference of the connection sleeve, the closed ring portion being coupled to the gripping protrusion for constraining the radially outward retraction of the gripping protrusion.

The radially, i.e. generally inwards, extending gripping protrusion serves for gripping the protective tube located within the connection sleeve so that the protective tube is kept in its place. One or more appropriately designed gripping protrusions ensure that the protective tube is not disengaged from the connection sleeve e.g. when the actual water pipe is changed. Preferably, a gripping protrusion is configured to cause gripping on the protective tube outer surface after the protective tube end is passed by the gripping protrusion. This can be implemented by a deformable protrusion defining a free inner diameter of the connection sleeve smaller than the protective tube outer surface.

The stiffening member means generally a reinforcement member reinforcing or stiffening the connection sleeve, the main portion of which may be made of an elastomer. The stiffening property of the stiffening member is based on its material; as known in the art, plastic materials generally have a limited elasticity which is lower than that of elastomers.

A closed ring portion extending around the circumference of the connection sleeve means a portion of the stiffening member extending as a continuous structure over the entire circumference of the connection sleeve. "Closed" thus refers to the fact that the ring portion encircles the entire circumference of the connection sleeve, i.e. forming a "closed" path over the circumference. Such closed ring portion efficiently reinforces the connection sleeve in comparison with a connection sleeve made entirely of an elastomer.

Constraining of the radially outward retraction of the gripping protrusion means that the coupling between the closed ring portion of the plastic stiffening member and the griping protrusion limits the retraction of the latter outwards in comparison to a connection sleeve entirely made of an elastomer.

The reinforcement of the connection sleeve by means of the stiffening member provides important advantages. First, the closed ring portion helps to maintain the generally cylindrical shape, i.e. a shape with a typically substantially circular cross-section, of the connection sleeve when handling and installing it. Similarly, once being installed through a hole in a cabinet wall, the stiffening member ensures the proper cross-sectional shape of the connection sleeve is maintained, thereby ensuring a waterproof contact with a circular cabinet wall hole. Moreover, constraining the radially outward retraction of the gripping protrusion by means of the coupling of the closed ring portion of the stiffening member to the gripping protrusion provides an efficient way to confirm the gripping of the connection sleeve on the protective tube received therein.

The stiffening member made of a plastic material is formed as an integral part of the connection sleeve, the rest of which is made of an elastomer, so as to form a single two-material connection sleeve body. The connection sleeve is thus formed as a two-material, one-part component wherein the plastic stiffening member forms an integral reinforcement member in a generally elastomer-based resilient connection sleeve. The integral reinforcement member can lie on the inner surface of the connection sleeve. It may also have portions extending through the connection sleeve wall, and it can also be partially embedded within the elastomer-based body of the connection sleeve.

The annular sealing surface comprises a conical annular section narrowing the snapping gap radially outwards, i.e. in the radial outward direction, for ensuring a waterproof contact between the annular sealing surface and the cabinet wall snapped, when in use, in the snapping gap. In this embodiment, a tight joint between the sealing surface and the cabinet wall can be ensured by dimensioning the smallest width of the narrowing snapping gap smaller than the thickness of the cabinet wall edge surrounding the hole in the cabinet wall.

In principle, the snapping protrusion may be formed in any suitable manner for providing an efficient snapping of the cabinet wall in the snapping gap. The snapping protrusion comprises a stop surface extending in a cross-sectional plane of the connection sleeve, the stop edge facing towards the annular sealing surface. The stop edge thus lies substantially in a plane perpendicular to the longitudinal, i.e. axial, direction of the connection sleeve. Such perpendicular stop edge firmly locks the cabinet wall edge surrounding a hole in the cabinet wall to the snapping gap, thereby preventing the movement of the cabinet wall in relation to the connection sleeve in a direction against the stop edge.

There can be one or more discrete snapping protrusions positioned, in a cross-sectional plane, along the circumference of the connection sleeve. However, in an efficient and structurally simple embodiment, the snapping protrusion forms a continuous annular snapping protrusion surrounding the entire circumference of the connection sleeve.

Preferably, the gripping protrusion is made of the same plastic material as the stiffening member, and is formed as an integral part of the stiffening member. This integral structure ensures an efficient gripping function and simplifies the manufacturing of the connection sleeve.

In one preferred embodiment, the closed ring portion of the stiffening member is coupled to the gripping protrusion by an axial arm, the axial arm and the gripping protrusion thereby forming an axial snap-fitting hook. In this embodiment, the outward retraction of the gripping protrusion is thus limited by the limited bendability of the axial arm in the radial direction of the connection sleeve.

The gripping protrusion has preferably a tip adapted to be fitted into an annular groove on the outer surface of a corrugated protective tube. This allows very efficient gripping on the typical corrugated protective tubes.

The connection sleeve may comprise a plurality of gripping protrusions as defined above located, radially separated from each other, in a cross-sectional plane of the connection sleeve. For example, there can be from two to five, e.g. three, separate gripping protrusions along the circumference of the connection sleeve.

In a preferable embodiment, the plastic stiffening member forms, at least partially, the snapping protrusion. In other words, similarly to the gripping protrusion, also the snapping protrusion may be formed, at least partially, as an integral part of the stiffening member. The at least partially plastic snapping protrusion ensures a safe joint between the connection sleeve and the cabinet wall through which the connection sleeve is placed to extend.

Preferably, in a cross-sectional plane of the connection sleeve at the location of the snapping protrusion, the stiffening member is discontinued along the circumference of the connection sleeve for facilitating the deformation of the connection sleeve for snap jointing it to the cabinet wall edge surrounding the hole in the cabinet wall. Being discontinued, in a cross-sectional plane, along the circumference of the connection sleeve means that the stiffening member does not extend continuously over the entire circumference in that particular plane. This can be implemented e.g. by holes arranged in the stiffening member in a cross sectional plane at the location area of the snapping protrusion. Being circumferentially discontinued in a cross-sectional plane at the location of the snapping protrusion enables the stiffening member to be designed so as to have a sufficient deformability of the connection sleeve at the location of the snapping protrusion to allow the snap-fit jointing of the connection sleeve to a cabinet wall.

In one embodiment, to ensure the necessary deformability yet sufficient stiffness of the connection sleeve, the stiffening member is discontinued along the circumference of the connection sleeve in any cross-sectional plane of the connection sleeve. In this embodiment, there is thus no single cross-sectional plane perpendicular to the longitudinal axis of the connection sleeve in which the stiffening member would cover the entire circumference of the connection sleeve. This can be implemented e.g. by means of a zig-zag or wavy closed ring portion of the stiffening member, i.e. a closed ring portion following a zig-zag or wavy path alternating from one side of a circumferential line in a cross-sectional plane to another.

In one embodiment, the gripping protrusion comprises an annular gripping protrusion in the tube section made of an elastomer, whereby the annular gripping protrusion is set, when in use, against the protective tube received in the tube section. The annular gripping protrusion is formed of the same elastomer as the rest of the tube section. In this embodiment, the gripping protrusion serves, in addition to the gripping function, for forming a waterproof contact between the connection sleeve and a protective tube received therein.

The embodiments below concern embodiments with a gripping protrusion formed as an annular protrusion in the tube section.

In one preferred embodiment, the closed ring portion of the stiffening member is formed as an openable ring member, releasably placed on the outer surface of the connection sleeve at the location of the tube section. Openable ring member means that the ring member has a closed state and an open state. Thus, in this embodiment, the connection sleeve comprises two separable parts. The coupling between the closed ring portion and the gripping portion is implemented by having the openable ring member placed over the tube section in which the gripping member lies.

In one preferred embodiment, the openable ring member has two end sections overlapping each other when the ring member is in its closed state, the end sections having complementary circumferential snap-fitting hooks for forming a snap-fit joint preventing the opening of the ring by tangential sliding of the ring end sections on each other.

To ensure the safe gripping and waterproof contact between the tube section and a protective tube therein, the connection sleeve may have a plurality of gripping protrusions in the tube section. For example, there can be two, three, four, or five gripping protrusions.

The tube section comprises preferably, on the outer surface of the connection sleeve, two axially separated restricting members defining therebetween, at the location of the one or more gripping protrusions, a recess for the stiffening member. Such recess ensures that the ring member is located appropriately with respect to the gripping protrusions(s) .

In one preferred embodiment, the tube section forms a base portion of the connection sleeve, the base portion extending, when in use, to the outer side of the cabinet wall, the tube section inner surface comprising a radially inwards extending stop edge for stopping, when in use, the protective tube received in the tube section. This embodiment makes it possible to have a wide base portion capable of receiving a protective tube which is wider than a standard-sized lead-through hole formed in a cabinet wall.

In the following, the two general material terms used in this document, i.e. "elastomer", and "plastic", are explained by listing examples of materials for those both groups.

Relisient, stretchable, and relatively soft materials referred to by the term "elastomer" comprise e.g. TPE (Thermoplastic elastomer), TPU (Thermoplastic Polyurethane), LSR (liquid silicone rubber), Natural Rubber, ACM (Polyacrylate Rubber), AEM (Ethyleneacrylate Rubber), AU (Polyester Urethane), BIIR (Bromo Isobutylene Isoprene), BR (Polybutadiene), CIIR (Chloro Isobutylene Isoprene), CR (Polychloroprene), CSM (Chlorosulphonated polyethylene), ECO (Epichlorohydrin), EP (Ethylene Propylene), EPDM (Ethylene Propylene Diene Monomer), EU (Polyether Urethane), FFKM (Perfluorocarbon Rubber), FKM (Fluoronated Hydrocarbon), FMQ (Fluoro Silicone), FPM (Fluorocarbon Rubber), HNBR(Hydrogenated Nitrile Butadiene), IR (Polyisoprene), IIR (Isobutylene Isoprene Butyl), NBR (Acrylonitrile Butadiene), PU (Polyurethane), SBR (Styrene Butadiene), SEBS (Styrene Ethylene Butylene Styrene Copolymer), SI (Polysiloxane), VMQ (Vinyl Methyl Silicone), XNBR (Acrylonitrile Butadiene Carboxy Monomer), XSBR (Styrene Butadiene Carboxy Monomer), YBPO (Thermoplastic Polyether-ester), YSBR (Styrene Butadiene Block Copolymer), and YXSBR (Styrene Butadiene Carboxy Block Copolymer).

Materials generally less relisient, less stretchable, and more rigid than the elastomers, referred to by the term "plastic", comprise e.g. ABS (Acrylonitrile butadiene styrene), ASA (Acrylonitrile Styrene Acrylate), CA (Cellulose acetate), PA6 (Ultramid polyamide), PA66 (Polyamide 66), other Nylon materials, PA Blend, PBT (Polybutylene terephthalate), PC (Polycarbonate), PC/ABS, PET (Polyethylene terephthalate), PC//PET, PE (Polyethylene), PMMA (Poly(methyl methacrylate)), POM (Polyoxymethylene), PP (Polypropylene), PPO (Polyphenylene oxide), PS (Polystyrene), and SAN (Styrene acrylonitrile). Possible are also other similar materials and various combinations of the above materials.

### BRIEF DESCRIPTION OF THE DRAWINGS

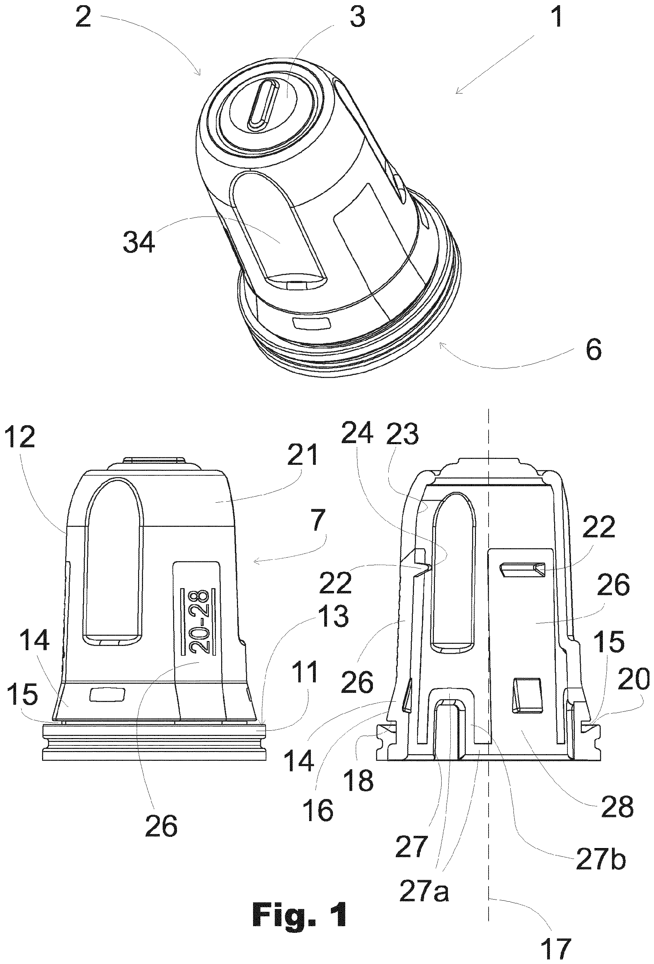

In the following, the present invention is described with reference to the accompanying drawings, wherein Figure 1 shows an exemplary connection sleeve according to the present invention,
Figure 2 illustrates the connection sleeve of Figure 1 in use,
Figure 3 shows another exemplary connection sleeve,
Figure 4 shows details of the connection sleeve of Figure 3, and
Figure 5 illustrates the connection sleeve of Figure 3 in use.

### DETAILED DESCRIPTION OF THE EMBODIMENTS

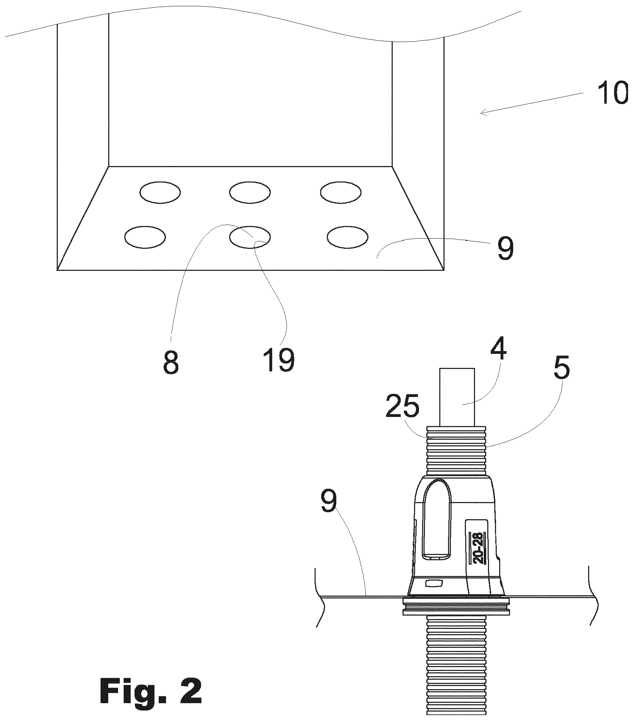

Figure 1 shows a perspective view, a side view, and a longitudinal sectional side view of a connection sleeve 1. The connection sleeve has a generally tubular body, i.e. a body in the form of a tube. The body is mainly made of an elastomer, such as rubber, though it comprises also a plastic portion, as will be discussed more specifically below. In the drawings of Figure 1, the first end 2 of the tubular connection sleeve is closed by a cap 3 to be removed before insertion of a water pipe through the connection sleeve. The cap allows having the connection sleeve in its place in a hole 8 in the wall 9 of a waterproof manifold cabinet 10 in advance, i.e. before insertion of any water pipe through the connection sleeve. The cap is formed during the manufacturing of the elastomer portion of the connection sleeve as an integral part thereof. After removal of the cap, the connection sleeve is open for inserting a water pipe 4 together with a protective tube 5 thereon into the connection sleeve from its second end 6 so as to extend through the connection sleeve, as illustrated in Figure 2.

The connection sleeve comprises a collar portion 7, the outer dimension of which is dimensioned to be sufficiently small so as to allow the insertion of the connection sleeve through a hole 8 in the wall 9 of a manifold cabinet 10, as again illustrated in Figure 2.

Behind the collar portion, when observed in the direction from the first end 2 of the connection sleeve towards the second end 6 thereof, there is a flange portion 11 made of an elastomer and defining, on the outer surface 12 of the connection sleeve, an annular sealing surface 13 facing generally towards the first end 2 of the connection sleeve.

At the base of the collar portion, there is an annular wedge-shaped snapping protrusion 14, extending generally radially outwards on the outer surface of the connection sleeve. The snapping protrusion 14 and the sealing surface 13 define therebetween a snapping gap 15 in the form of an annular groove.

In the example of Figures 1 and 2, the snapping protrusion is wedge-shaped with a wedge surface 16 diverging from the longitudinal central axis 17 of the connection sleeve towards the second end 6 of the connection sleeve. In other words, the annular wedge surface 16 defines a conical section, tapering towards the connection sleeve first end 2, on the outer surface 12 of the connection sleeve. On the side of the connection sleeve second end 6, the snapping protrusion ends at an annular stop surface 18 perpendicular to the central axis 17 and facing towards the second end 6 of the connection sleeve, and thus generally towards the sealing surface 13.

The purpose of the snapping gap 15 is to receive, when the connection sleeve 1 is pushed through a hole 8 in the cabinet wall 9, the cabinet wall edge 19 surrounding the hole 8, thereby forming a snap-fit joint between the connection sleeve 1 and the cabinet wall 9. The dimensioning of the snapping protrusion to allow the snap-fit joint can be made according to the principles known in the art. It is to be noted that the continuous annular snapping protrusion is an example only; it is also possible to have separate snapping protrusions located along the circumference of the connection sleeve.

The sealing surface 13 has a conical annular section 20 at its outer part, the conical section narrowing the snapping gap 15 in the radial outward direction. The conical section and the distance between the snapping protrusion 14 and the sealing surface 13 are preferably dimensioned so that the narrowest part of the snapping gap is narrower than the thickness of the cabinet wall 9. Then, when the cabinet wall edge 19 is received in the snapping gap, the sealing surface 13 of the resilient flange portion 11 made of the elastomer is pressed tightly against the cabinet wall. This way, a waterproof connection is ensured between the connection sleeve outer surface and the cabinet wall 9.

In the first end part of the connection sleeve, the collar portion 7 comprises a tube section 21 tapering towards the first end 2 of the connection sleeve. The tube section is dimensioned so that the inner diameter thereof is smaller than the outer diameter of the protective tube 5. As it is made of the elastomer which is the main material of the connection sleeve, the tube section is stretchable so as to allow the protective tube 5 to be pushed through the connection sleeve as illustrated in Figure 2. At least part of the stretched tube section 7 is then set tightly against the protective tube outer surface, thereby sealing the connection between the protective tube and the connection sleeve in a waterproof manner.

As shown in the longitudinal cross sectional view of Figure 1, the connection sleeve 1 has gripping protrusions 22 extending radially inwards from the connection sleeve inner surface 23. The gripping protrusions grip on the outer surface of the protective tube 5, pushed into the connection sleeve, and ensure that the protective tube is kept in its place. This way, the inner water pipe 4 may be changed without releasing the protective tube 5 from the connection sleeve.

Each gripping protrusion is generally wedge-shaped with two opposite wedge surface sides defining a tip 24, the width of which in the longitudinal direction of the connection sleeve is dimensioned so that the tip can reach the annular groove 25 of the corrugated protective tube 5, thereby gripping the protective tube received in the connection sleeve. Each gripping protrusion is made of a plastic material less resilient and less stretchable than the elastomer. The gripping protrusions are connected to the ends of axial, i.e. longitudinally extending, arms 26 made of the same plastic material as the gripping protrusions. In the example of Figure 1, there are three pairs of gripping protrusions 22 and axial arms 26 placed along the circumference of the connection sleeve. In other embodiments, there could be also some other number of such pairs, e.g. two, four, or five. The other ends of the axial arms are joined to a zig-zag ring 27 made of the same plastic material as the gripping protrusions 22 and the axial arms 26. The zig-zag ring extends as a closed, continuous ring structure around the entire circumference of the connection sleeve.

The gripping protrusions, the axial arms, and the zig-zag ring together form a rigid, integral stiffening member 28. The stiffening member, in turn, is formed as an integral part of the connection sleeve 1, the rest of which is made of the elastomer. The plastic stiffening member forms a reinforcement sub-body within the connection sleeve body. The stiffening member, comprising the closed ring portion formed by the zig-zag ring 27, ensures that the tubular body of the connection sleeve maintains its substantially cylindrical shape during the handling and installation thereof. It also constrains the bending of the axial arms 26 and thus the radially outward retraction of the gripping protrusions 22, thereby strengthening the gripping effect.

The axial arms 26 extend through the entire wall thickness of the connection sleeve and form partially the annular snapping protrusion 14, thereby reinforcing the snap joint in comparison to a connection sleeve made entirely of an elastomer. The axial arm as a rigid part of the outer surface of the connection sleeve serves also as a plate on which informative markings can be formed. For example, as illustrated in the side view drawing of Figure 1, the water pipe and/or protective tube sizes suitable for the exemplary connection sleeve are marked on the axial arm.

The zig-zag ring 27 is formed as a structure not extending continuously, in any single cross-sectional plane of the connection sleeve, over the entire circumference of the connection sleeve. Thus, the zig-zag ring forms a closed ring structure which is circumferentially interrupted, i.e. discontinued, in any cross-sectional plane of the connection sleeve. The zig-zag ring forming the closed ring structure is formed by peripheral ring sections 27a in different cross-sectional planes, connected by means of substantially axial ring sections 27b. Instead of alternating peripheral and axial ring sections, a circumferentially interrupted closed ring structure could also be implemented e.g. by means of a wavy ring, smoothly curving back and forth around the peripheral line of the connection sleeve in a cross-sectional plane thereof.

The fact that the closed ring structure of the stiffening member 28 is circumferentially interrupted ensures a sufficient deformability of the connection sleeve 1, in particular at the location of the snapping protrusion 14. The deformability is required to allow sliding of the snapping protrusion 14 over the cabinet wall edge 19 surrounding the hole in the cabinet wall until the cabinet wall edge is snapped into the snapping groove 15.

The basic construction of a connection sleeve of Figure 1 can be used to make connection sleeves for various sizes of water pipes and/or protective tubes. This can be implemented by just adjusting the dimensioning of the collar portion, especially the tube section thereof and the inner diameter of the connection sleeve at the location of the gripping protrusions appropriately. The sealing surface of the flange portion as well as the snapping protrusion can be kept substantially identical in all size variations so as to fit all connection sleeves for various pipe/tube sizes to one standard-sized hole in the cabinet wall.

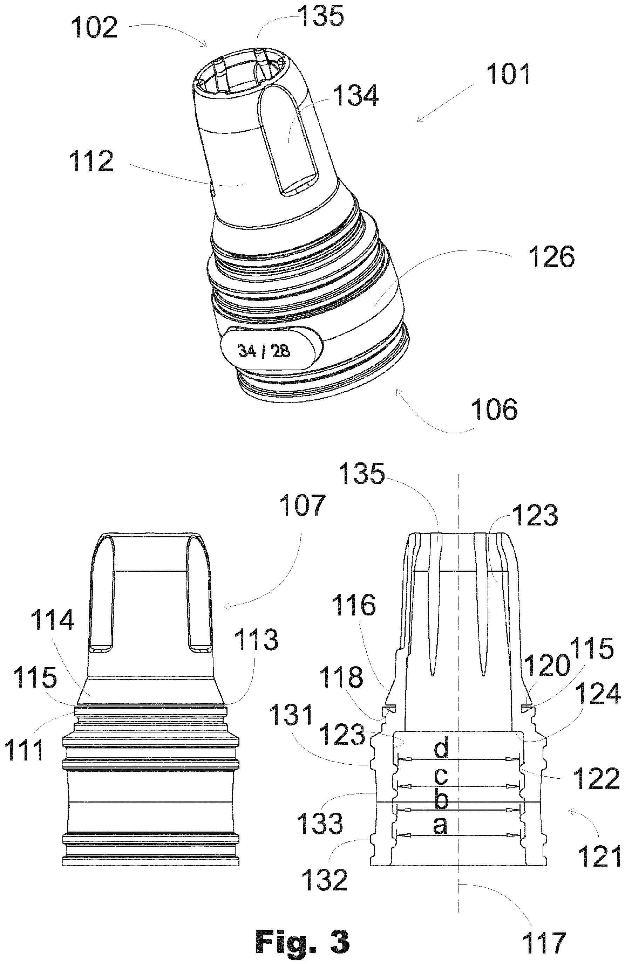

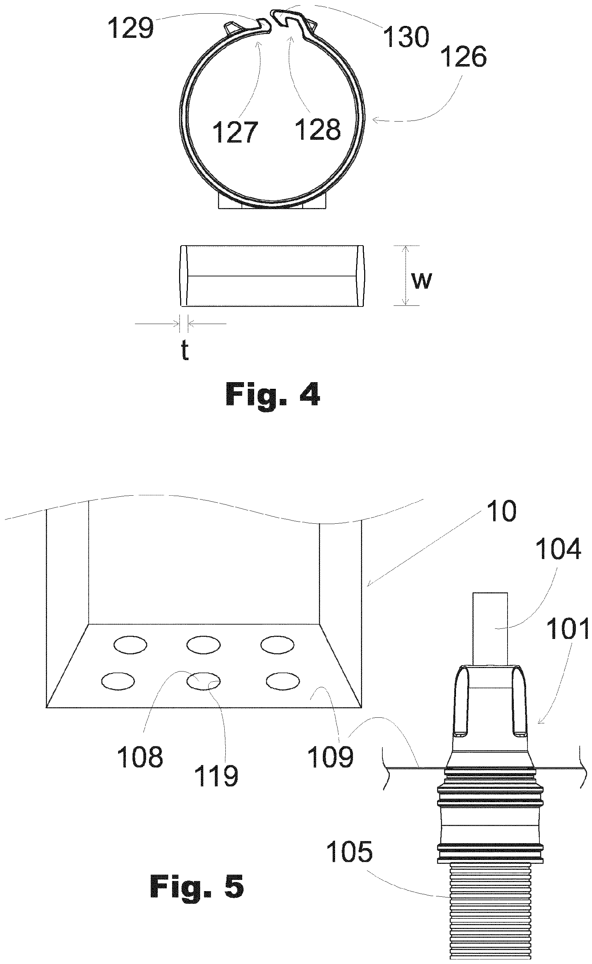

Figure 3 shows a perspective view, a side view, and a sectional side view of another connection sleeve 101. The connection sleeve has a generally tubular body, i.e. a body in the form of a tube section. The body is made of an elastomer, such as rubber. The connection sleeve is open for inserting a water pipe 104 together with a protective tube 105 thereon into the connection sleeve from its second end 106 so that the water pipe extends through the connection sleeve, as illustrated in Figure 5.

The connection sleeve comprises a collar portion 107, the outer dimension of which is dimensioned to be sufficiently small so as to allow insertion of the connection sleeve through a hole 8 in the wall 9 of a manifold cabinet 10, as again illustrated in Figure 5.

Behind the collar portion, when observed in the direction from the first end 102 of the connection sleeve towards the second end 106 thereof, there is a flange portion 111 made of the elastomer and defining on the outer surface 112 of the connection sleeve an annular sealing surface 113 facing generally towards the first end 102 of the connection sleeve.

At the base of the collar portion, there is an annular wedge-shaped snapping protrusion 114, extending generally radially outwards on the outer surface of the connection sleeve. The snapping protrusion 114 and the sealing surface 113 define therebetween a snapping gap 115.

In the example of Figures 3 and 5, the snapping protrusion is wedge-shaped with a wedge surface 116 diverging from the longitudinal central axis 117 of the connection sleeve towards the second end of the connection sleeve. In other words, the annular wedge surface defines a conical section, tapering towards the connection sleeve first end 102, on the outer surface 112 of the connection sleeve. On the side of the connection sleeve second end 106, the snapping protrusion ends at an annular stop surface 118 perpendicular to the central axis 117 and facing towards the second end 106 of the connection sleeve, and thus generally towards the sealing surface 113.

The purpose of the snapping gap 115 is to receive, when the connection sleeve 101 is pushed towards a hole 8 in the cabinet wall 9, the cabinet wall edge 19 surrounding the hole 8, thereby forming a snap-fit joint between the connection sleeve 101 and the cabinet wall 9. The dimensioning of the snapping protrusion to allow the snap-fit joint can be made according to the principles known in the art. It is to be noted that the continuous annular snapping protrusion is an example only; it is also possible to have separate snapping protrusions located along the circumference of the connection sleeve.

The sealing surface 113 has a conical annular section 120 in its outer part, the conical section narrowing the snapping gap 115 in the radial outward direction. The conical section and the distance between the snapping protrusion 114 and the sealing surface 113 are preferably dimensioned so that the narrowest part of the snapping gap is narrower than the thickness of the cabinet wall. Then, when the cabinet wall edge 19 is received in the snapping gap, the sealing surface 113 of the resilient flange portion 111 made of the elastomer is pressed tightly against the cabinet wall. This way, a waterproof connection is ensured between the connection sleeve outer surface and the cabinet wall 9.

On the side of the second end 106 of the connection sleeve in relation to the snapping gap 115 and the flange portion 111, there is a tube section 121 forming a base portion of the connection sleeve to be extended, when the connection sleeve 101 is installed in its place and jointed to the cabinet wall 9, to the exterior of the cabinet wall, as illustrated in Figure 5. This allows also protective tubes with sizes exceeding the diameter of the cabinet wall hole 8 to be connected to the connection sleeve.

On the inner surface 123 of the connection sleeve, there are annular gripping protrusions 122 in the tube section 121, axially separated from each other. In the example of Figure 3, there are four annular gripping protrusions. Alternatively, the number of gripping protrusions could be e.g. 1, 2, 3 or 5. The gripping protrusions extend radially inwards from the connection sleeve inner surface 123. The tube section inner diameter and the annular gripping protrusions are dimensioned so that the free inner diameters a, b, c, d at the locations of a gripping protrusion are slightly smaller than the outer diameter of the protective tube 105 to be inserted into the connection sleeve 101. This causes the tube section 121, particularly the annular gripping protrusions thereof, to be set tightly against the protective tube 105. The protective tube 105 pushed into the connection sleeve is thus kept firmly in its place. This way, the inner water pipe 104 may be changed without releasing the protective tube 105 from the connection sleeve. Moreover, the annular gripping protrusions made of the elastomer also form a waterproof sealing contact between the protective tube 105 and the connection sleeve 101.

The tube section 121 has a radial inner end surface 124 limiting the penetration of a protective tube 105 pushed into the connection sleeve 101.

In the example of Figure 3, the free inner diameter in the tube section tapers slightly towards the first end 102 of the connection sleeve so that the free inner diameter a, b, c, d at the location of any annular gripping protrusion 122 is smaller than the free inner diameter of the previous (when observed from the second end 106 towards the first end 102 of the connection sleeve) annular gripping protrusion 122. Thus, using the reference letters a to d for the inner diameters, "a" denoting the outermost annular gripping member, the inner diameters satisfy the condition: a>b, b>c, and c>d. This ensures a tight contact between the tube section and the protective tube yet enabling the penetration of the latter until the end of the protective tube 105 contacts the radial end surface 124.

Though not shown in the drawings, also the connection sleeve 101 of Figure 3 could be made so as to be initially closed by a cap, similarly to the connection sleeve of Figure 1.

As shown in the perspective view of Figure 3, the connection sleeve 101 comprises a ring member 126, made of a plastic material less resilient and stretchable than the elastomer of which the tubular body of the connection sleeve 101 is formed. The ring member is placed on the outer surface 112 of the connection sleeve at the location of the tube section 121.

The ring member 126 is formed as an openable structure and can thus be removed for insertion of a protective tube 105 into the connection sleeve 101. As illustrated in Figure 4, the ring member 126 is formed as a plastic stripe having a width w and a thickness t, bendable to form a loop so that the end sections 127, 128 of the ring member overlap, i.e. extend on each other. (In Figure 4, the ring member is shown in its open state with no overlap.) The end sections have complementary circumferential snap-fitting hooks 129, 130 for forming a snap-fit joint preventing the opening of the ring member by tangential sliding of the end sections 127, 128 on each other. A closed ring member can be opened by sliding the end sections axially in relation to each other as long as the hooks are released. It can also be opened by first sliding the hooks tangentially forwards, i.e. to the direction of an increased overlap, after which the upper hook can be lifted and/or the lower hook can be lowered so as to release the hooks.

The exemplary ring member 126 of Figures 3 and 4 has a thickening forming a plate on the ring member outer surface on which informative markings can be formed. For example, as illustrated in the perspective view of Figure 3, the water pipe and/or protective tube sizes suitable for the exemplary connection sleeve are marked on this plate.

The tube section comprises, on the outer surface thereof and thus on the outer surface 112 of the connection sleeve 101, two axially separated restricting members 131, 132, defining therebetween a recess 133 for the ring member for ensuring proper placement of the latter. The length of the recess in the longitudinal direction of the connection sleeve is adapted to the width w of the ring member. The outer diameter of the connection sleeve tapers slightly from the restricting members towards the center of the recess. The ring member inner surface has a complementary shape with the smallest inner diameter at the center of the ring member.

Being made of a plastic material, the ring member 126 acts as a stiffening member of the connection sleeve 101, reinforcing the connection sleeve so that its generally cylindrical shape is maintained during handling and installation. Being located on the tube section 121, the ring member is also coupled to the annular gripping protrusions 122 and constrains the axially outward retraction thereof, thereby ensuring a tight contact between the connection sleeve 101 and the protective tube 105 received therein. Being in its place on the connection sleeve, the ring member forms a closed ring portion of the stiffening member, i.e. a ring extending continuously over the entire periphery of the connection sleeve.

In manufacturing the connection sleeves 1, 101 of Figures 1 and 3, known manufacturing processes can be used. For example, one possible manufacturing technique to be used is injection molding.

Various other structural features are possible in the connection sleeves 1, 101 to stiffen the tubular body, or to enhance the setting of the connection sleeve against the water pipe and/or protective tube. For example, there are axial indentations 34, 134 in the collar portion 7, 107 in the examples of Figures 1 and 3. The connection sleeve 101 of Figure 3 also comprises axial protrusions 135 at the inner surface of the collar portion 107.

It is to be noted that the present invention is not limited to the examples above. Instead, the embodiments of the present invention can freely vary within the scope of the claims.

## Claims

1. A tubular plug-in type connection sleeve (1, 101) for forming a lead-through of a water pipe (4, 104) with a protective tube (5, 105) thereon through a hole (8) in a wall (9) of a manifold cabinet (10), the connection sleeve comprising:
- a flange portion (11, 111) made of an elastomer, defining, on the outer surface (12, 112) of the connection sleeve, an annular sealing surface (13, 113) ;
- a radially outwards extending snapping protrusion (14, 114) on the outer surface of the connection sleeve defining, together with the annular sealing surface, a snapping gap (15, 115) for receiving, when in use, a cabinet wall edge (19) surrounding the hole in the cabinet wall, whereby the annular sealing surface is pressed against the cabinet wall, wherein the snapping protrusion (14, 114) comprises a stop surface (18, 118) extending in a cross-sectional plane of the connection sleeve perpendicular to the longitudinal direction of the connection sleeve, the stop surface (18, 118) facing towards the annular sealing surface (13, 113); the annular sealing surface (13, 113) comprising a conical annular (20, 120) section narrowing the snapping gap (15, 115) radially outwards for ensuring a waterproof contact between the annular sealing surface and the cabinet wall (9) snapped, when in use, in the snapping gap;
- a tube section (21, 121) made of an elastomer for receiving the protective tube, the tube section inner surface being shaped and dimensioned so as to be set, when in use, against the protective tube received in the tube section;
- a gripping protrusion (22, 122) extending radially inwards from the inner surface (23, 123) of the connection sleeve for gripping the protective tube received, when in use, in the connection sleeve; and
- a stiffening member (28, 126) made of a plastic material, comprising a closed ring portion (27, 126) extending around the circumference of the connection sleeve, the closed ring portion being coupled to the gripping protrusion for constraining the radially outward retraction of the gripping protrusion, the stiffening member (28) being formed as an integral part of the connection sleeve, the rest of which is made of an elastomer, so as to form a single two-material connection sleeve body.

2. A connection sleeve (1, 101) as defined in claim 1, wherein the snapping protrusion (14, 114) forms a continuous annular snapping protrusion surrounding the circumference of the connection sleeve.

3. A connection sleeve (1) as defined in any of claims 1 or 2, wherein the gripping protrusion (22) is made of the same plastic material as the stiffening member (28), and formed as an integral part of the stiffening member.

4. A connection sleeve (1) as defined in any of claims 1 to 3, wherein the closed ring portion (27) is coupled to the gripping protrusion (22) by an axial arm (26), the axial arm and the gripping protrusion thereby forming an axial snap-fitting hook.

5. A connection sleeve (1) as defined in any of claims 1 to 4, wherein the gripping protrusion has a tip (24) adapted to be fitted into an annular groove (25) on the outer surface of a corrugated protective tube (5).

6. A connection sleeve (1) as defined in any of claims 1 to 5, wherein the connection sleeve comprises a plurality of gripping protrusions (22) located, radially separated from each other, in a cross-sectional plane of the connection sleeve.

7. A connection sleeve (1) as defined in any of claims 1 to 6, wherein the stiffening member (28) forms, at least partially, the snapping protrusion.

8. A connection sleeve (1) as defined in any of claims 1 to 7, wherein, in a cross-sectional plane of the connection sleeve at the location of the snapping protrusion (14), the stiffening member (28) is discontinued along the circumference of the connection sleeve for facilitating the deformation of the connection sleeve for snap jointing it to the cabinet wall edge (19) surrounding the hole (8) in the cabinet wall (9).

9. A connection sleeve (1) as defined in claim 8, wherein the stiffening member (28) is discontinued along the circumference of the connection sleeve in any cross-sectional plane of the connection sleeve.

10. A manifold cabinet (10) equipped with a connection sleeve (1, 101) as defined in any of claims 1 to 9 jointed by a snap-fit joint to the cabinet wall edge (19) surrounding a hole (8) formed in the cabinet wall (9) .

## Patentansprüche

1. Rohrförmige, steckbare Verbindungsmuffe (1, 101) zur Bildung eines Durchlasses eines Wasserrohrs (4, 104), mit einer Schutzröhre (5, 105) darauf, durch ein Loch (8) in einer Wand (9) eines Verteilergehäuses (10), wobei die Verbindungsmuffe umfasst:
- einen Flanschteil (11, 111) aus einem Elastomer, der auf der Außenfläche (12, 112) der Verbindungsmuffe eine ringförmige Dichtfläche (13, 113) definiert;
- einen sich radial nach außen erstreckenden Schnappvorsprung (14, 114) an der Außenfläche der Verbindungsmuffe, der im Gebrauch zusammen mit der ringförmigen Dichtfläche einen Einschnappspalt (15, 115) zur Aufnahme einer das Loch in der Gehäusewand umgebende Gehäusewandkante (19) definiert,
wobei die ringförmige Dichtfläche gegen die Gehäusewand gedrückt wird, wobei der Schnappvorsprung (14, 114) eine Anschlagfläche (18, 118) aufweist, die sich in einer Querschnittsebene der Verbindungsmuffe senkrecht zur Längsrichtung der Verbindungsmuffe erstreckt und wobei die Anschlagfläche (18, 118) zur ringförmigen Dichtfläche (13, 113) zugewandt ist;
wobei die ringförmige Dichtfläche (13, 113) einen konischen ringförmigen (20, 120) Abschnitt aufweist, der den Einschnappspalt (15, 115) radial nach außen verengt, um einen wasserdichten Kontakt zwischen der ringförmigen Dichtungsfläche und der Gehäusewand (9) sicherzustellen, die im Gebrauch in den Einschnappspalt einschnappt;
- ein Röhrenabschnitt (21, 121) aus einem Elastomer zur Aufnahme der Schutzröhre, wobei die Innenfläche des Röhrenabschnitts so geformt und dimensioniert ist, dass sie im Gebrauch an die in dem Röhrenabschnitt aufgenommene Schutzröhre anzulegen ist;
- ein Greifvorsprung (22, 122), der sich von der inneren Oberfläche (23, 123) der Verbindungsmuffe radial nach innen erstreckt zum Greifen der Schutzröhre, das im Gebrauch in der Verbindungsmuffe aufgenommen ist; und
- ein Versteifungselement (28, 126) aus einem Kunststoffmaterial, das einen geschlossenen Ringabschnitt (27, 126) umfasst, der sich um den Umfang der Verbindungsmuffe erstreckt, wobei der geschlossene Ringabschnitt mit dem Greifvorsprung verbunden ist, um das radiale Zurückziehen des Greifvorsprungs nach außen zu begrenzen, wobei das Versteifungselement (28) als integraler Bestandteil der Verbindungsmuffe ausgebildet ist, deren Rest aus einem Elastomer besteht, um einen einzigen Zwei-Materialien-Verbindungsmuffen-Körper zu bilden.

2. Verbindungsmuffe (1, 101) nach Anspruch 1, wobei der Schnappvorsprung (14, 114) einen kontinuierlichen ringförmigen Schnappvorsprung bildet, der den Umfang der Verbindungsmuffe umgibt.

3. Verbindungsmuffe (1) nach einem der Ansprüche 1 oder 2, wobei der Greifvorsprung (22) aus dem gleichen Kunststoffmaterial wie das Versteifungselement (28) hergestellt und als integraler Teil des Versteifungselementes ausgebildet ist.

4. Verbindungsmuffe (1) nach einem der Ansprüche 1 bis 3, wobei der geschlossene Ringabschnitt (27) mit dem Greifvorsprung (22) durch einen axialen Arm (26) verbunden ist, wobei der axiale Arm und der Greifvorsprung einen axialen Schnapphaken bilden.

5. Verbindungsmuffe (1) nach einem der Ansprüche 1 bis 4, wobei der Greifvorsprung eine Spitze (24) aufweist, die in eine ringförmige Nut (25) auf der Außenfläche einer geriffelten Schutzröhre (5) eingepasst werden kann.

6. Verbindungsmuffe (1) nach einem der Ansprüche 1 bis 5, wobei die Verbindungsmuffe eine Mehrzahl von Greifvorsprüngen (22) aufweist, die, radial voneinander getrennt in einer Querschnittsebene der Querschnittsebene der Verbindungsmuffe angeordnet sind.

7. Verbindungsmuffe (1) nach einem der Ansprüche 1 bis 6, wobei das Versteifungselement (28) zumindest teilweise den Schnappvorsprung bildet.

8. Verbindungsmuffe (1) nach einem der Ansprüche 1 bis 7, wobei das Versteifungselement (28) in einer Querschnittsebene der Verbindungsmuffe an der Stelle des Schnappvorsprungs (14) entlang des Umfangs der Verbindungsmuffe unterbrochen ist, um die Verformung der Verbindungsmuffe zum Einschnappen an der das Loch (8) in der Gehäusewand (9) umgebenden Gehäusewandkante (19) zu erleichtern.

9. Verbindungsmuffe (1) nach Anspruch 8, wobei das Versteifungselement (28) entlang des Umfangs der Verbindungsmuffe in jeder Querschnittsebene der Verbindungsmuffe unterbrochen ist.

10. Verteilergehäuse (10) mit einer Verbindungsmuffe (1, 101) nach einem der Ansprüche 1 bis 9, die durch eine Schnappverbindung mit der Gehäusewandkante (19) verbunden ist, die ein in der Gehäusewand (9) ausgebildetes Loch (8) umgibt.

## Revendications

1. Manchon de raccordement tubulaire de type plug-in (1, 101) destiné à former un passage pour une conduite d'eau (4, 104) sur laquelle se situe un tube protecteur (5, 105) à travers un orifice (8) dans une paroi (9) d'un boîtier de collecteur (10), le manchon de raccordement comprenant :
- une partie de bride (11, 111) réalisée dans un élastomère, la partie de bride définissant une surface d'étanchéité annulaire (13, 113) sur la surface externe (12, 112) du manchon de raccordement,
- une saillie d'encliquetage (14, 114) s'étendant radialement vers l'extérieur sur la surface externe du manchon de raccordement, la saillie d'encliquetage définissant avec la surface d'étanchéité annulaire un espace d'encliquetage (15, 115) pour recevoir, en service, un bord de la paroi du boîtier de collecteur (19) qui entoure l'orifice dans la paroi du boîtier, la surface d'étanchéité annulaire étant, ainsi, pressée contre la paroi du boîtier, la saillie d'encliquetage (14, 114) comprenant une surface d'arrêt (18, 118) s'étendant, dans un plan transversal du manchon de raccordement, perpendiculairement à la direction longitudinale du manchon de raccordement, la surface d'arrêt (18, 118) faisant face à la surface d'étanchéité annulaire (13, 113), la surface d'étanchéité annulaire (13, 113) comprenant une section annulaire conique (20, 120) qui diminue l'espace d'encliquetage (15, 115) radialement vers l'extérieur pour assurer un contact étanche à l'eau entre la surface d'étanchéité annulaire et la paroi du boîtier de collecteur (9) encliquetée, en service, dans l'espace d'encliquetage,
- une section de tube (21, 121) réalisée en un élastomère pour recevoir le tube protecteur, la surface interne de la section de tube étant formée et dimensionnée de manière à être placée, en service, contre le tube protecteur reçu dans la section de tube,
- une saillie de préhension (22, 122) s'étendant radialement vers l'intérieur à partir de la surface interne (23, 123) du manchon de raccordement pour serrer le tube protecteur reçu, en service, dans le manchon de raccordement, et
- un élément raidisseur (28, 126) réalisé dans un matériau artificiel, élément raidisseur comprenant une partie annulaire fermée (27, 126) qui s'étend autour de la circonférence du manchon de raccordement, la partie annulaire fermée étant couplée à la saillie de préhension pour limiter la rétraction radialement vers l'extérieur de la saillie de préhension, l'élément raidisseur (28) étant conçu comme partie intégrante du manchon de raccordement, dont le reste est réalisé en élastomère de sorte à former un seul corps de manchon de raccordement à deux matériaux.

2. Manchon de raccordement (1, 101) selon la revendication 1, dont la saillie d'encliquetage (14, 114) forme une saillie d'encliquetage annulaire continue entourant la circonférence du manchon de raccordement.

3. Manchon de raccordement (1) selon une des revendications 1 ou 2, dont la saillie de préhension (22) est réalisée dans le même matériau artificiel que l'élément raidisseur (28) et conçue comme partie intégrante de celui-ci.

4. Manchon de raccordement (1) selon une des revendications 1 ou 3, dont la partie annulaire fermée (27) est couplée à la saillie de préhension (22) par un bras axial (26), le bras axial et la saillie de préhension formant, ainsi, un crochet d'encliquetage.

5. Manchon de raccordement (1) selon une des revendications 1 à 4, dont la saillie de préhension possède une pointe (24) adaptée à être placée dans une rainure annulaire (25) sur la surface externe d'un tube protecteur annelé (5).

6. Manchon de raccordement (1) selon une des revendications 1 à 5, le manchon de raccordement comprenant une pluralité de saillies de préhension (22) situées de manière radialement séparées les unes des autres dans un plan transversal du manchon de raccordement.

7. Manchon de raccordement (1) selon une des revendications 1 à 6, dont l'élément raidisseur (28) forme la saillie d'encliquetage au moins partiellement.

8. Manchon de raccordement (1) selon une des revendications 1 à 7, dont l'élément raidisseur (28) est interrompu dans un plan transversal du manchon de raccordement, à l'emplacement de la saillie d'encliquetage (14) le long de la circonférence du manchon de raccordement pour faciliter la déformation de celui-ci, afin de le raccorder par encliquetage au bord de la paroi (19) du boîtier de collecteur qui entoure l'orifice (8) dans la paroi du boîtier (9).

9. Manchon de raccordement (1) selon la revendication 8, dont l'élément raidisseur (28) est interrompu le long de la circonférence du manchon de raccordement dans n'importe quel plan transversal de celui-ci.

10. Boîtier de collecteur (10) équipé d'un manchon de raccordement (1, 101) selon une des revendications 1 à 9 qui est raccordé par un raccord à encliqueter au bord de la paroi du boîtier (19) qui entoure un orifice (8) formé dans la paroi du boîtier (9).
